(19) Europäisches Patentamt
European Patent Office
Office européen des brevets

(11) **EP 1 153 979 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**06.04.2011 Patentblatt 2011/14**

(45) Hinweis auf die Patenterteilung:
**25.06.2003 Patentblatt 2003/26**

(21) Anmeldenummer: **01109326.7**

(22) Anmeldetag: **12.04.2001**

(51) Int Cl.:
*C08L 57/04* (2006.01)     *C09D 5/02* (2006.01)
*C09J 157/04* (2006.01)     *C08F 2/22* (2006.01)
*C08J 3/12* (2006.01)

(54) **Funktionalisierte Copolymerisate für die Herstellung von Beschichtungsmitteln**

Functionalised copolymers for the preparation of coating materials

Polymères fonctionnalisés pour la préparation de revêtement

(84) Benannte Vertragsstaaten:
**AT BE CH CY DE DK ES FI FR GB GR IE IT LI LU MC NL PT SE TR**

(30) Priorität: **11.05.2000 DE 10022992**

(43) Veröffentlichungstag der Anmeldung:
**14.11.2001 Patentblatt 2001/46**

(73) Patentinhaber: **Wacker Chemie AG**
**81737 München (DE)**

(72) Erfinder:
• **Stark, Kurt, Dr.**
**84508 Burgkirchen (DE)**
• **Tschirner, Peter, Dr.**
**84547 Emmerting (DE)**
• **Ball, Peter, Dr.**
**84547 Emmerting (DE)**
• **Büppelmann, Klaus, Dr.**
**84547 Emmerting (DE)**

• **Kotschi, Udo, Dr.**
**84489 Burghausen (DE)**

(74) Vertreter: **Schuderer, Michael et al**
**Wacker Chemie AG**
**Zentralbereich Patente, Marken und Lizenzen**
**Hanns-Seidel-Platz 4**
**81737 München (DE)**

(56) Entgegenhaltungen:
EP-A- 0 215 518     EP-A- 0 898 026
WO-A-98/35994     DE-A- 1 595 501
DE-A- 2 535 372     JP-A- 07 062 036
JP-A- 09 048 942     JP-A- 10 218 944
JP-A- 12 007 882

• XXIII FATIPEC Congress, Brussels 10-14 June 1996, Volume D, B. Momper "Vinylacetat/Ethylen Copolymerdispersionen als Bindemittel für emissionsarme Innen- und Seidenglanzfarben".

EP 1 153 979 B2

**Beschreibung**

Die Erfindung betrifft funktionalisierte Copolymerisate in Form deren wäßrigen Dispersionen oder in Wasser redispergierbaren Pulver, Verfahren zu deren Herstellung sowie deren Verwendung.

Aus dem Stand der Technik ist bekannt, daß durch den Einsatz von hydrolysierbaren Vinylsilanen bei der Herstellung von Polymerdispersionen Verbesserungen der Eigenschaften als Bindemittel für Farben erzielt werden können. So wird in der DE-C 2148457 (GB-A 1407827) beschrieben, wie durch den Einsatz von wäßrigen Dispersionen, welche Polymerisate mit einpolymerisierten Silanolgruppen enthalten, die Naßhaftung von Bautenbeschichtungsmitteln auf verschiedensten Untergründen verbessert werden kann. Die EP-A 327376 beschreibt die Herstellung von Polymerdispersionen auf Vinylesterbasis, wobei ethylenisch ungesättigte Alkoxysilanmonomere in der Weise copolymerisiert werden, daß ein Teil der Silanmonomere vor der Polymerisation vorgelegt wird. Die Polymerdispersionen werden zur Herstellung von Farben mit guten Naßabriebswerten empfohlen. Aus der EP-A 327006 (US-A 5576384) sind VOC-arme (VOC = volatile organic compounds) Dispersionsfarben und Putze bekannt, zu deren Herstellung Dispersionen verwendet werden, die Copolymerisate mit hydrolysierbaren Silaneinheiten enthalten. Zur Stabilisierung der Dispersion wird Hydroxyethylcellulose, nichtionischer Emulgator und Vinylsulfonat benutzt.

Nachteilig bei den bisher bekannten Polymerdispersionen ist, daß diese keine generelle Verbesserung der Naßhaftung bewirken, sondern sehr unterschiedlich in den verschiedenen Farbformulierungen wirken. So kann eine Dispersion in einer silikatreichen Formulierung gute Naßabriebsbeständigkeiten aufweisen, werden jedoch mehr carbonatische Füllstoffe in der Formulierung verwendet, kann die gleiche Dispersion nur noch zu Farben mit schlechter Naßabriebsfestigkeit führen.

Aufgabe der Erfindung war es daher, Polymerisate zu entwickeln, die in unterschiedlichen Farbrezepturen, beispielsweise sowohl silikatreichen als auch carbonatreichen, zu Beschichtungsmitteln, beispielsweise Farben, mit sehr guter Naßabriebsbeständigkeit führen.

Gegenstand der Erfindung sind funktionalisierte Copolymerisate in Form deren wäßrigen Dispersionen oder in Wasser redispergierbaren Pulver, auf Basis von

a) Vinylester-Copolymerisaten von Vinylacetat mit weiteren Vinylestern, oder Vinylester-Ethylen-Copolymerisaten, oder Vinylester-Ethylen-Vinylchlorid-Copolymerisaten, oder Vinylester-Acrylsäureester-Copolymerisaten, , oder Methylmethacrylat-Copolymerisaten, oder Styrol-1,3-Butadien-Copolymerisaten, mit,

b) 0.05 bis 5.0 Gew.-% von einem oder mehreren hydrolysierbaren Silan-Monomeren aus der Gruppe umfassend ethylenisch ungesättigte, hydrolysierbare Siliciumverbindungen und hydrolysierbare Siliciumverbindungen aus der Gruppe umfassend Mercaptosilane,

c) 0.05 bis 5.0 Gew.-% von einem oder mehreren Monomeren aus der Gruppe umfassend ethylenisch ungesättigte Epoxidverbindungen,

d) 0 bis 2.0 Gew.-% von einem oder mehreren Monomeren aus der Gruppe umfassend ethylenisch ungesättigte 1,3-Dicarbonylverbindungen,

wobei die Angaben in Gew.-% jeweils auf das Gesamtgewicht der eingesetzten Monomere a) bezogen sind.

Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von $\alpha$-verzweigten Monocarbonsäuren mit 5 bis 11 C-Atomen, beispielsweise VeoVa9[R] oder VeoVa10[R] (Handelsnamen der Firma Shell). Besonders bevorzugt ist Vinylacetat.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, isound t-Butylacrylat, 2-Ethylhexylacrylat und Norbornylacrylat.

Die Comonomere a) werden dabei vorzugsweise so ausgewählt, dass wässrige Copolymerdispersionen und wässrige Redispersionen der Copolymerpulver resultieren, die ohne Zusatz von Filmbildehilfsmittel eine Mindestfilmbildetemperatur MFT von < 10°C, bevorzugt < 5°C, insbesondere von 0°C bis 2°C aufweisen. Dem Fachmann ist aufgrund der Glasübergangstemperatur Tg bekannt, welche Monomere bzw. Monomermischungen dafür eingesetzt werden können. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. $\underline{1}$, 3, page 123 (1956) gilt: $1/Tg = x_1/Tg_1 + x_2/Tg_2 + ... + x_n/Tg_n$, wobei $x_n$ für den Massebruch (Gew.-%/100) des Monomeren n steht, und $Tg_n$ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Gegebenenfalls können noch 0.05 bis 10 Gew.-%, bezogen auf das Gesamtgewicht der eingesetzten Monomere a), Hilfsmonomere copolymerisiert werden. Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Hilfsmonomere sind vorvernetzende Comonomere aus der Gruppe der mehrfach ethylenisch ungesättigten Comonomere, beispielsweise Divinyladipat, Diallylmaleat, Allylmethacrylat, Butandioldiacrylat oder Triallylcyanurat, oder nachvernetzende Comonomere, aus der Gruppe umfassend Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Bevorzugt sind die nachfolgend genannten Copolymerzusammensetzungen, welche noch die Comonomeranteile b), c), und gegebenenfalls d) sowie Hilfsmonomeranteile in den angegebenen Mengen enthalten können, und wobei die Copolymerzusammensetzung so gewählt wird, daß die damit erhältliche wäßrige Dispersion eine MFT von < 10°C, bevorzugt < 5°C, insbesondere von 0°C bis 2°C aufweist, so daß auf ein Filmbildehilfsmittel verzichtet werden kann:

Vinylester-Copolymerisate von Vinylacetat mit weiteren Vinylestern wie Vinyllaurat, Vinylpivalat, Vinyl-2-ethylhexansäureester, Vinylester einer alpha-verzweigten Carbonsäure mit 5 bis 11 C-Atomen, insbesondere Versaticsäurevinylester mit 9 oder 10 C-Atomen (VeoVa9$^R$, VeoVa10$^R$);

Vinylester-Ethylen-Copolymerisate, wie Vinylacetat-Ethylen-Copolymerisate, welche gegebenenfalls noch weitere Vinylester wie Vinyllaurat, Vinylpivalat, Vinyl-2-ethylhexansäureester, Vinylester einer alpha-verzweigten Carbonsäure mit 5 bis 11 C-Atomen, insbesondere Versaticsäurevinylester mit 9 oder 10 C-Atomen (VeoVa9$^R$, VeoVa10$^R$), oder Fumarsäure- oder Maleinsäurediester enthalten;

Vinylester-Ethylen-Vinylchlorid-Copolymerisate, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure mit 5 bis 11 C-Atomen, insbesondere Versaticsäurevinylester mit 9 oder 10 C-Atomen (VeoVa9$^R$, VeoVa10$^R$), enthalten sind;

Vinylester-Acrylsäureester-Copolymerisate mit Vinylacetat und/ oder Vinyllaurat und/oder Versaticsäure-Vinylester und Acrylsäureester, insbesondere Butylacrylat oder 2-Ethylhexylacrylat, welche gegebenenfalls noch Ethylen enthalten;

Methylmethacrylat-Copolymerisate mit Butylacrylat und/oder 2-Ethylhexylacrylat, und/oder 1,3-Butadien;

Styrol-1,3-Butadien-Copolymerisate Als Butylacrylat kann n-, iso-, tert-Butylacrylat eingesetzt werden.

Am meisten bevorzugt werden Vinylester-Ethylen-Copolymerisate wie Vinylacetat-Ethylen-Copolymerisate, sowie Copolymerisate von Vinylacetat und Ethylen und Vinylester einer $\alpha$-verzweigten Carbonsäure mit 9 oder 10 C-Atomen (VeoVa9$^R$, VeoVa10$^R$), welche jeweils noch die Comonomeranteile b), c), und gegebenenfalls d) sowie Hilfsmonomeranteile in den angegebenen Mengen enthalten können, und wobei die Copolymerzusammensetzung so gewählt wird, daß die damit erhältliche wäßrige Dispersion eine MFT von < 10°C aufweist.

Geeignete hydrolysierbare Siliciumverbindungen b) sind beispielsweise ethylenisch ungesättigte Siliciumverbindungen der allgemeinen Formel $R^1SiR_{0-2}(OR^2)_{1-3}$, wobei R die Bedeutung $C_1$- bis $C_3$-Alkylrest, $C_1$- bis $C_3$-Alkoxyrest oder Halogen (z.B. Cl oder Br) hat, $R^1$ die Bedeutung $CH_2=CR^3-(CH_2)_{0-1}$ oder $CH_2=CR^3CO_2(CH_2)_{1-3}$ hat, $R^2$ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei $R^2$ gegebenenfalls durch eine Ethergruppe unterbrochen sein kann, und $R^3$ für H oder $CH_3$ steht. Bevorzugt sind gamma-Acryl- bzw. gamma-Methacryloxypropyltri (alkoxy)silane, gamma-Methacryloxymethyltri (alkoxy)silane, gamma-Methacryloxypropylmethyldi(alkoxy)silane, Vinylalkyldi(alkoxy) silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für geeignete Siliciumverbindungen b) sind Vinyltrimethoxysilan, Vinyltriethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris (2-methoxyethoxy)silan, Vinyltrichorsilan, Vinylmethyldichlorsilan, Vinyltris-(2-methoxyethoxy)silan, Trisacetoxyvinylsilan, 3-(Triethoxysilyl)propylbern-steinsäureanhydridsilan.

Geeignete Silanverbindungen b) sind insbesondere auch Mercaptosilane der allgemeinen Formel $HS-(CR^4_2)_{1-3}$ $-SiR^5_3$, wobei $R^4$ gleich oder verschieden ist und die Bedeutung H und $C_1$- bis $C_6$-Alkyl-gruppe, $R^5$ gleich oder verschieden ist und die Bedeutung $C_1$- bis $C_6$-Alkylgruppe und $C_1$- bis $C_6$-Alkoxygruppe hat, wobei mindestens einer der Reste $R^5$ eine Alkoxygruppe ist. Bevorzugt werden 3-Mercaptopropyltriethoxysilan, 3-Mercaptopropyl-trimethoxysilan und 3-Mercaptopropylmethyldimethoxysilan.

Als Silane b) werden am meisten bevorzugt Vinyltrimethoxysilan, Vinyltriethoxysilan, Vinyltris-(1-methoxy)-isopropoxysilan, Methacryloxypropyl-tris(2-methoxyethoxy)silan, 3-Mercaptopropyltrimethoxysilan, 3-Methacryloxypro-

**EP 1 153 979 B2**

pyltrimethoxysilan, 3-Methacryloxypropylmethyldimethoxysilan und Methacryloxymethyltrimethoxysilan sowie deren Gemische, insbesondere Gemische von 2 oder mehreren Silanen aus der Gruppe umfassend von 3-Methacryloxypropyltrimethoxysilan oder Methacryloxymethyltrimethoxysilan mit Vinyltrimethoxysilan, Vinyltriethoxysilan und/oder 3-Mercaptopropyltrimethoxysilan. Der Gehalt an Silanen b) beträgt vorzugsweise 0.05 bis 3.5 Gew.-%, besonders bevorzugt 0.1 bis 1 Gew.-%, am meisten bevorzugt 0.1 bis 0.5 Gew.-%, jeweils bezogen auf das Gesamtgewicht der eingesetzten Monomere a).

Geeignete Epoxidgruppen enthaltende Comonomere c) sind Glycidylacrylat, Glycidylmethacrylat, Allylglycidether, Vinylglycidether, Vinylcyclohexenoxid, Limonenoxid, Myrcenoxid, Caryophyllenoxid, mit einem Glycidylrest im Aromaten substituierte Styrole und Vinyltoluole sowie mit einem Glycidresten im Aromaten substituierte Vinylbenzoate. Bevorzugt werden Glycidylacrylat, Glycidylmethacrylat, Allylglycidether, Vinylglycidether. Der Gehalt an Epoxyverbindungen beträgt 0.1 bis 5 Gew.-%, bevorzugt 0.25 bis 1.5 Gew.-%, besonders bevorzugt 0.4 bis 1.2 Gew.-%, jeweils bezogen auf das Gesamtgewicht der eingesetzten Monomere a). Am meisten bevorzugt werden Copolymerisate mit einer Kombination von 0.1 bis 1.0 Gew.-% Comonomer b) mit 0.25 bis 1.5 Gew.-% Comonomer c), insbesondere Kombinationen mit 0.1 bis 0.5 Gew.-% Comonomer b) mit 0.4 bis 1.2 Gew.-% Comonomer c).

In einer bevorzugten Ausführungsform enthalten die Copolymerisate noch zusätzlich Monomereinheiten von ethylenisch ungesättigte 1,3-Dicarbonylverbindungen d). Beispiele für polymerisierbare 1,3-Dicarbonylverbindungen sind Acetacetoxyethylacrylat, Acetacetoxypropylmethacrylat, Acetacetoxyethylmethacrylat, Acetacetoxybutylmethacrylat, 2,3- Di(acetacetoxy)propylmethacrylat und Acetessigsäureallylester. Das bevorzugte Comonomere d) ist Acetessigsäureallylester (Acallyl). Der Gehalt an 1,3-Dicarbonylverbindungen beträgt vorzugsweise 0.01 bis 2 Gew.-%, besonders bevorzugt 0.1 bis 1 Gew.-%, jeweils bezogen auf das Gesamtgewicht der eingesetzten Monomere a).

Die Dispersionen werden mittels radikalischer Polymerisation, vorzugsweise Emulsionspolymerisation, hergestellt. Die Polymerisation wird üblicherweise in einem Temperaturintervall von 20°C bis 100°C durchgeführt, insbesondere zwischen 45°C und 80°C. Die Initiierung erfolgt mittels der gebräuchlichen Radikalbildner, welche vorzugsweise in Mengen von 0.01 bis 3.0 Gew.-%, bezogen auf das Gesamtgewicht der Monomere, eingesetzt werden. Als Initatoren werden vorzugsweise anorganische Peroxide wie Ammonium-, Natrium-, Kaliumperoxodisulfat oder Wasserstoffperoxid entweder alleine oder in Kombination mit Reduktionsmitteln wie Natriumsulfit, Natriumhydrogensulfit, Natriumformaldehydsulfoxylat oder Ascorbinsäure verwendet. Es können auch wasserlösliche organische Peroxide, beispielsweise t-Butylhydroperoxid, Cumolhydroperoxid, üblicherweise in Kombination mit Reduktionsmittel, eingesetzt werden, oder aber auch wasserlösliche Azoverbindungen. Bei der Copolymerisation mit gasförmigen Monomeren wie Ethylen und Vinylchlorid wird unter Druck gearbeitet, im allgemeinen zwischen 5 und 100 $bar_{abs.}$.

Zur Stabilisierung der Dispersion können anionische und nichtionische Emulgatoren sowie Schutzkolloide verwendet werden. Bevorzugt werden nichtionische oder anionische Emulgatoren eingesetzt, vorzugsweise eine Mischung aus nichtionischen und anionischen Emulgatoren. Als nichtionische Emulgatoren werden bevorzugt Kondensationsprodukte von Ethylenoxid oder Propylenoxid mit linearen oder verzweigten Alkoholen mit 8 bis 18 Kohlenstoffatomen, Alkylphenolen oder linearen oder verzweigten Carbonsäuren von 8 bis 18 Kohlenstoffatomen eingesetzt, sowie Blockcopolymere von Ethylenoxid und Propylenoxid eingesetzt.

Geeignete anionische Emulgatoren sind beispielsweise Alkylsulfate, Alkylsulfonate, Alkylarylsulfate, sowie Sulfate oder Phosphate von Kondensationsprodukten des Ethylenoxides mit linearen oder verzweigten Alkylalkoholen und mit 5 bis 25 EO-Einheiten, Alkylphenolen, und Mono- oder Diester der Sulfobernsteinsäure. Die Emulgatormenge beträgt 0.5 bis 10 Gew.-%, bezogen auf das Gesamtgewicht der eingesetzten Monomere a).

Gegebenenfalls können noch Schutzkolloide eingesetzt werden. Beispiele für geeignete Schutzkolloide sind Polyvinylalkohole mit einem Gehalt von 75 bis 95 Mol-%, bevorzugt 84 bis 92 Mol-%, Vinylalkoholeinheiten; Poly-N-Vinylamide wie Polyvinylpyrrolidone; Polysaccharide wie Stärken, sowie Cellulosen und deren Carboxymethyl-, Methyl-, Hydroxyethyl-, Hydroxypropyl-Derivate; synthetische Polymere wie Poly(meth)acrylsäure, Poly(meth)-acrylamid. Besonders bevorzugt wird der Einsatz der genannten Polyvinylalkohole. Die Schutzkolloide werden im allgemeinen in einer Menge von 0.5 bis 10 Gew.-%, bezogen auf das Gesamtgewicht der eingesetzten Monomere a), eingesetzt.

Gegebenenfalls können zur Steuerung des Molekulargewichts die üblichen Regler verwendet werden, beispielsweise Alkohole wie Isopropanol, Aldehyde wie Acetaldehyd, chlorhaltige Verbindungen, Mercaptane wie n-Dodecylmercaptan, t-Dodecylmercaptan, Mercaptopropionsäure(ester). Zur Einstellung des pH-Wertes können bei der Herstellung der Dispersion pH-regulierende Verbindungen wie Natriumacetat oder Ameisensäure eingesetzt werden.

Die Polymerisation kann unabhängig vom Polymerisationsverfahren mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Die Comonomeren a), b), c), und gegebenenfalls d), können zur Herstellung der Dispersion alle vorgelegt werden (Batch-Prozess), oder es wird ein Teil der Monomeren vorgelegt und der Rest dosiert (Semibatch-Prozess).

Bevorzugt wird der Silananteil b) insgesamt während der Polymerisation zudosiert und der Epoxidanteil c) ebenfalls insgesamt zudosiert. Besonders bevorzugt wird der Epoxidanteil c) gegen Ende der Polymerisation, bei einem

**4**

Umsatz von 80 bis 100 %, zudosiert. Die 1,3-Dicarbonylverbindung d) kann ganz oder teilweise dosiert oder insgesamt vorgelegt werden. Vorzugsweise wird die 1,3-Dicarbonylverbindung d) während der Polymerisation ganz oder teilweise dosiert, besonders bevorzugt ganz dosiert. Eine weitere bevorzugte Ausführungsform betrifft die Dosierung eines Gemisches von zwei oder mehreren verschiedenen Silanen. Zum Beispiel werden zunächst eines oder mehrere Silane kontinuierlich zudosiert und ein weiteres, anderes Silan wird zusammen mit dem Epoxidanteil nach Beendigung der Dosierung des/der ersten Silans/Silane zudosiert. Die zur Stabilisierung der Dispersion eingesetzten Emulgatoren und gegebenenfalls Schutzkolloide können alle in der Vorlage vorgelegt werden oder teilweise vorgelegt werden und der Rest während der Polymerisation dosiert werden. Dabei können die oberflächenaktiven Substanzen allein oder als Voremulsion mit den Comonomeren dosiert werden.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere und weitere flüchtige, nicht wäßrige Bestandteile der Dispersion können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wäßrigen Dispersionen haben einen Feststoffgehalt von 40 bis 70 Gew.-%, vorzugsweise von 50 bis 65 Gew.-%. Zur Herstellung von in Wasser redispergierbaren Polymerpulvern werden die wäßrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Geeignete Verdüsungshilfen sind die bereits genannten Schutzkolloide. Bei der Verdüsung hat sich vielfach ein Gehalt von bis zu 1.5 Gew.-% Antischaummittel, bezogen auf das Basispolymerisat, als günstig erwiesen. Zur Verbesserung der Verblockungsstabilität kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate.

Mit der erfindungsgemäßen Vorgehensweise werden Copolymerisate zugänglich, welche sowohl in silikatreichen als auch in carbonatreichen Farbformulierungen zu Beschichtungen mit hoher Naßabriebsfestigkeit führen. Mit den bisher bekanntenBindemitteln auf der Basis von silanolfunktionellen Copolymerisaten konnte nur in Farbformulierungen mit silikatreichen Füllstoffanteilen eine befriedigende Naßabriebsfestigkeit erzielt werden.

Die funktionalisierten Copolymerisate in Form deren wäßrigen Dispersionen und in Wasser redispergierbaren Pulver eignen sich zur Anwendung in Beschichtungsmitteln, speziell im Baubereich, und insbesondere für die Anwendung in emissionsarmen Kunststoffdispersionsfarben und Kunststoffdispersionsputzen. Die Rezepturen für Dispersionsfarben und Dispersionsputze sind dem Fachmann bekannt, und enthalten im allgemeinen 5 bis 50 Gew.-% des funktionalisierten Copolymerisats, 5 bis 35 Gew.-% Wasser, 5 bis 80 Gew.-% Füllstoff, 5 bis 30 Gew.-% Pigmente sowie 0.1 bis 10 Gew.-% weitere Zusatzstoffe, wobei sich die Angaben in Gew.-% in der Rezeptur auf 100 Gew.-% aufaddieren.

Beispiele für einsetzbare Füllstoffe sind Carbonate wie Calciumcarbonat in Form von Dolomit, Calcit und Kreide. Weitere Beispiele sind Silikate, wie Magnesiumsilikat in Form von Talkum, oder Aluminiumsilikate wie Lehm und Tone; Quarzmehl, Quarzsand, hochdisperse Kieselsäure, Feldspat, Schwerspat und Leichtspat. Geeignet sind auch Faserfüllstoffe. In der Praxis werden häufig Gemische verschiedener Füllstoffe eingesetzt. Beispielsweise Gemische von Füllstoffen unterschiedlicher Teilchengröße oder Gemische von carbonatischen und silikatischen Füllstoffen. Im letzteren Fall spricht man bei einem Anteil von mehr als 50 Gew.-%, insbesondere mehr als 75 Gew.-% Carbonat bzw. Silikat am Gesamtfüllstoffanteil von carbonatreichen bzw. silikatreichen Rezepturen. Kunststoffputze enthalten im allgemeinen grobkörnigere Füllstoffe als Dispersionsfarben. Die Körnung liegt dabei oftmals zwischen 0.2 und 5.0 mm. Ansonsten können Kunststoffputze die selben Zusatzstoffe wie Dispersionsfarben enthalten.

Geeignete Pigmente sind beispielsweise Titandioxid, Zinkoxid, Eisenoxide, Ruß als anorganische Pigmente, sowie die gebräuchlichen organischen Pigmente. Beispiele für weitere Zusatzstoffe sind Netzmittel in Anteilen von im allgemeinen 0.1 bis 0.5 Gew.-%, bezogen auf das Gesamtgewicht der Rezeptur. Beispiele hierfür sind Natrium- und Kaliumpolyphosphate, Polyacrylsäuren und deren Salze. Als Zusatzstoffe sind auch Verdickungsmittel zu nennen, welche im allgemeinen in einer Menge von 0.01 bis 2.0 Gew.-%, bezogen auf das Gesamtgewicht der Rezeptur, eingesetzt werden. Gebräuchliche Verdickungsmittel sind Celluloseether, Stärken, oder Bentonit als Beispiel für ein anorganisches Verdickungsmittel. Weitere Zusatzstoffe sind Konservierungsmittel, Entschäumer, Gefrierschutzmittel.

Zur Herstellung der Beschichtungsmittel wird die Polymerdispersion oder das Polymerpulver mit den weiteren Rezepturbestandteilen Füllstoff und weiteren Zuschlägen in geeigneten Mischern gemischt und homogenisiert. Das Polymerpulver kann gegebenenfalls auch in Form einer wäßrigen Redispersion auf der Baustelle zugegeben werden. In vielen Fällen wird eine Trockenmischung hergestellt und das zur Verarbeitung erforderliche Wasser unmittelbar vor der Verarbeitung hinzugefügt. Bei der Herstellung von pastösen Massen wird häufig zunächst der Wasseranteil vorgelegt, die Dispersion zugegeben und abschließend die Feststoffe eingerührt.

Bei der Verwendung in Beschichtungsmittel zeichnen sich die funktionalisierten Copolymerisate vor allem auch dadurch aus, daß diese auch bei einer hohen Pigmentvolumenkonzentration (PVK), das heißt in hochgefüllten und überkritisch formulierten Zusammensetzungen (PVK > 65 %), noch hohe Naßabriebsfestigkeiten garantieren. Im allgemeinen beträgt die PVK ≥ 50 %, bevorzugt 60 bis 85 % und errechnet sich mit PVK (%) = $(V_{P+F} \times 100) / (V_{P+F} + V_B)$ mit $V_{P+F}$ = Volumen Pigment + Füllstoff und $V_B$ = Volumen Bindemittel. Besonders vorteilhaft sind die funktionalisierten Copolymerisate als Bindemittel in Beschichtungsmittel-Rezepturen für emissionsarme Innenfarben, insbesondere solchen mit hoher PVK (hochgefüllte Farben).

Die nachfolgenden Beispiele dienen zur weiteren Erläuterung der Erfindung.

Beispiele 1 bis 19:

In den Beispielen 1 bis 19 wurden Vinylacetat-Ethylen-Copolymerisat-Dispersionen mit einer MFT von ca. 1°C hergestellt. Dazu wurde eine Grundrezeptur eingesetzt, wie sie in Tabelle 1 bezüglich Comonomeranteile, Emulgator- und Schutzkolloidauswahl, Initiatorsystem und Vorlage bzw. Dosierung der Bestandteile des Reaktionsgemisches beschrieben wird.

Genapol X 360 = Ethoxylierter Tridecylalkohol mit einem Ethoxylierungsgrad von 25,

Genapol X 150 = Ethoxylierter Tridecylalkohol mit einem Ethoxylierungsgrad von 15,

Mersolat = Na-Alkylsulfonat mit 12 bis 14 C-Atomen im Alkylrest

Texapon K 12 = Natriumlaurylsulfat,

Polyvinylalkohol (25/140) = Polyvinylalkohol mit einer Viskosität

von 25 mPas (20°C, 4 %-ige Lösung, gemessen nach Höppler)

und einer Verseifungszahl von 140 (mg KOH / g Polymer) (Hydrolysegrad 88 Mol-%). Ein derartiger Polyvinylalkohol ist zum Beispiel Airvol 523.

Tabelle 1:

| Grundrezeptur | | | |
|---|---|---|---|
| Verbindung | Teile | Vorlage | Dosierung |
| Vinylacetat | 100.0 | 10 | 90 |
| Ethylen | 11.0 | 3.5 | 7.5 |
| Natriumvinylsulfonat | 0.2 | 0.2 | 0.0 |
| | | | |
| Genapol X 360 | 5.0 | 0.8 | 4.2 |
| Texapon K 12 | 0.55 | 0.55 | 0.0 |
| Polyvinylalkohol (25/140) | 1.13 | 0.0 | 1.13 |
| | | | |

(fortgesetzt)

| Grundrezeptur | | | |
|---|---|---|---|
| Verbindung | Teile | Vorlage | Dosierung |
| Ammoniumperoxodisulfat | 0.25 | 0.0 | 0.25 |
| Natriumbisulfit | 0.20 | 0.0 | 0.20 |

Die Durchführung der Polymerisation bei den Beispielen 1 bis 19 wird anhand des Vorgehens in Beispiel 11 näher beschrieben:

Beispiel 11:

In einem 16 Liter Autoklaven wurden 2.06 kg Wasser, 200 g Genapol X 360 (25 %-ige wäßrige Lösung), 5.74 g Natriumacetat, 229 g Texapon K 12(15 %-ige wäßrige Lösung), 49.9 g Natriumvinylsulfonat, 3.7 g Acetessigsäureallylester und 624 g Vinylacetat vorgelegt. Es wurde mit 12 ml Ameisensäure auf pH 5 eingestellt und 10 ml Trilon B (EDTA) (2 %-ige wäßrige Lösung) und 31 ml Eisenammonsulfat als 1 %-ige Lösung zugegeben. Der Kessel wurde auf 70°C aufgeheizt und es wurden 22 bar Ethylen aufgedrückt. Sobald sich der Reaktor im thermischen Gleichgewicht befand, wurde eine 5 %-ige Ammoniumpersulfatlösung mit 68 ml pro Stunde eingefahren, sowie eine 3.5 %-ige Natriumbisulfitlösung mit 85 ml pro Stunde. 25 Minuten später wurde begonnen Vinylacetat mit 863 g pro Stunde zu dosieren. Gleichzeitig wurde eine Hilfsmonomer-Emulgatordosierung eingefahren mit einer Dosierleistung von 445 g pro Stunde. Zusammensetzung der Dosierlösung: 1.06 kg Wasser, 1.04 kg Genapol X 360 (25 %-ige wäßrige Lösung) 18.71 g Natriumacetat, 705 g Airvol 523 (Polyvinylalkohol)(10 %-ige Lösung), 31.66 g Allylacetoacetat und 31.82 g Vinyltrimethoxysilan.

Die Gesamtdosierzeit für beide Dosierungen betrug 6.5 Stunden. 30 Minuten nach dem Ende der Vinylacetat und Hilfsmonomer-Emulgatordosierung wurde die "GMA-Dosierung" eingefahren. Zusammensetzung der "GMA-Dosierung": 125 g Wasser, 2.94 g Genapol X 360 und 74.85 g Glycidylmethacrylat. Die Dosierzeit betrug 30 Minuten. Nach dem Ende der "GMA-Dosierung" wurde die APS- und Bisulfitdosierung noch 1 Stunde fortgesetzt. Nach dem Entspannen wurde die Dispersion zur Restmonomerminimierung "gestrippt" und anschließend mit Hydorol W konserviert.
Dispersionsanalysen:

Feststoffgehalt: 54.8 %, pH: 4.8, Brookfield-Viskosität 20: 2500 mPas, MFT: 1°C, Siebrückstand 60 $\mu$m Sieb: 26 ppm

Beispiel 20:

In einem 572 Liter Druckautoklaven wurden 74.62 kg Wasser, 4.91 kg Genapol X 150 (40 %-ige wäßrige Lösung), 226.05 g Natriumacetat (100 %-ig), 3.52 kg Mersolat (40 %-ige wäßrige Lösung), 1.97 kg Natriumvinylsulfonat (25 %ig) und 24.57 kg Vinylacetat vorgelegt. Mit 10 %-iger Ameisensäure wurde auf pH = 5 eingestellt. Ferner wurden 314 ml Trilon B (EDTA; 2 %-ige wäßrige Lösung) und 991 ml Eisenammonsulfat (1 %-ige Lösung) zugegeben. Der Kessel wurde auf 70°C aufgeheizt und es wurden 22 bar Ethylen aufgedrückt. Sobald sich der Reaktor im thermischen Gleichgewicht befand, wurde eine 10.0 %-ige Ammoniumpersulfatlösung (APS-Lösung) mit 1023 g pro Stunde und eine 5.05 %-ige Natriumsulfitlösung mit 1976 g pro Stunde eingefahren. 25 Minuten später wurde begonnen, eine Mischung von 221.14 kg Vinylacetat, 626.8 g Vinyltrimethoxysilan und 639.86 g 3-Mercaptopropyl-trimethoxysilan mit einer Rate von 34.22 kg pro Stunde zu dosieren (Monomerdosierung).

Gleichzeitig wurde eine Emulgatordosierung mit einer Dosierleistung von 15.19 kg pro Stunde eingefahren. Die Emulgatordosierung enthielt 44.46 kg Wasser, 25.73 kg Genapol X 150 (40 %ige wäßrige Lösung), 737.12 g Natriumacetat und 27.76 kg Airvol 523 (Polyvinylalkohol; 10 %-ige Lösung).
Die Gesamtdosierzeit für beide Dosierungen belief sich auf 6.5 Stunden.
15 min nach dem Reaktionsbeginn wurde die APS-Dosierung auf 636 g pro Stunde, die Na-Sulfit-Dosierung auf 1226 g pro Stunde reduziert.
30 Minuten nach dem Ende der Vinylacetat- und der Emulgatordosierung wurde die "GMA-Dosierung" eingefahren. Zusammensetzung der "GMA-Dosierung": 4.91 kg Wasser, 72.48 g Genapol X 150 und 2.95 kg Glycidylmethacrylat. Die Dosierzeit betrug 30 Minuten (Rate: 15.9 kg pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen:

Feststoffgehalt: 60.2 %, pH-Wert: 5.45; Brookfield-Viskosität 20 (Spindel 4): 2410 mPas; MFT: 1°C; Ethylengehalt: 13.68 %; Dichte: 1.073 g/ml

Beispiel 21:

In einem 572 Liter Druckautoklaven wurden 73.16 kg Wasser, 4.82 kg Genapol X 150 (40 %-ige wäßrige Lösung), 221.63 g Natriumacetat (100 %-ig), 4.47 kg Mersolat (30.9 %-ige wäßrige Lösung), 1.93 kg Natriumvinylsulfonat (25 %-ig), 4.82 kg Versaticsäurevinylester (VeoVa 10) und 19.27 kg Vinylacetat vorgelegt. Mit 10 %-iger Ameisensäure wurde auf pH = 5 eingestellt. Ferner wurden 314 ml Trilon B (EDTA; 2 %-ige wäßrige Lösung) und 991 ml Eisenammonsulfat (1 %-ige Lösung) zugegeben. Der Kessel wurde auf 70°C aufgeheizt und es wurden 22 bar Ethylen aufgedrückt. Sobald sich der Reaktor im thermischen Gleichgewicht befand, wurde eine 10.0 %-ige Ammoniumpersulfatlösung (APS-Lösung) mit 1023 g pro Stunde und eine 5.05 %-ige Natriumsulfitlösung mit 1976 g pro Stunde eingefahren. 25 Minuten später wurde begonnen, eine Mischung von 173.45 kg Vinylacetat, 43.36 kg VeoVa 10 und 1.23 kg Vinyltrimethoxysilan mit einer Rate von 33.55 kg pro Stunde zu dosieren (Monomerdosierung). Gleichzeitig wurde eine Emulgatordosierung mit einer Dosierleistung von 14.89 kg pro Stunde eingefahren. Die Emulgatordosierung enthielt 43.59 kg Wasser, 25.22 kg Genapol X 150 (40 %ige wäßrige Lösung), 722.71 g Natriumacetat und 27.22 kg Airvol 523 (Polyvinylalkohol; 10 %-ige Lösung).
Die Gesamtdosierzeit für beide Dosierungen belief sich auf 6.5 Stunden.
15 min nach dem Reaktionsbeginn wurde die APS-Dosierung auf 636 g pro Stunde, die Na-Sulfit-Dosierung auf 1226 g pro Stunde reduziert.
30 Minuten nach dem Ende der Vinylacetat- und der Emulgatordosierung wurde die "GMA-Dosierung" eingefahren. Zusammensetzung der "GMA-Dosierung": 4.82 kg Wasser, 71.07 g Genapol X 150 und 2.89 kg Glycidylmethacrylat. Die Dosierzeit betrug 30 Minuten (Rate: 15.6 kg pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen:

Feststoffgehalt: 58.8 %, pH-Wert: 5.24; Brookfield-Viskosität 20 (Spindel 5): 3000 mPas; MFT: 0°C; K-Wert: 75.92; Ethylengehalt: 19.32 %; Dichte: 1.060 g/ml

Beispiel 22:

In einem 572 Liter Druckautoklaven wurden 73.14 kg Wasser, 4.82 kg Genapol X 150 (40 %-ige wäßrige Lösung), 221.55 g Natriumacetat (100 %ig), 4.47 kg Mersolat (30.9 %-ige wäßrige Lösung), 1.93 kg Natriumvinylsulfonat (25 %-ig), 4.82 kg Versaticsäurevinylester (VeoVa 10) und 19.27 kg Vinylacetat vorgelegt. Mit 10 %-iger Ameisensäure wurde auf pH = 5 eingestellt. Ferner wurden 314 ml Trilon B (EDTA; 2 %-ige wäßrige Lösung) und 991 ml Eisenammonsulfat (1 %-ige Lösung) zugegeben. Der Kessel wurde auf 70°C aufgeheizt und es wurden 22 bar Ethylen aufgedrückt. Sobald sich der Reaktor im thermischen Gleichgewicht befand, wurde eine 10.0 %-ige Ammoniumpersulfatlösung (APS-Lösung) mit 1023 g pro Stunde und eine 5.05 %-ige Natriumsulfitlösung mit 1976 g pro Stunde eingefahren. 25 Minuten später wurde begonnen, eine Mischung von 173.39 kg Vinylacetat, 43.35 kg VeoVa 10 und 1.23 kg Vinyltriethoxysilan mit einer Rate von 33.54 kg pro Stunde zu dosieren (Monomerdosierung).
Gleichzeitig wurde eine Emulgatordosierung mit einer Dosierleistung von 14.89 kg pro Stunde eingefahren. Die Emulgatordosierung enthielt 43.58 kg Wasser, 25.21 kg Genapol X 150 (40 %ige wäßrige Lösung), 722.45 g Natriumacetat und 27.21 kg Airvol 523 (Polyvinylalkohol; 10 %-ige Lösung).
Die Gesamtdosierzeit für beide Dosierungen belief sich auf 6.5 Stunden.
Ca. 15 min nach dem Reaktionsbeginn wurde die APS-Dosierung auf 636 g pro Stunde, die Na-Sulfit-Dosierung auf 1226 g pro Stunde reduziert.
30 Minuten nach dem Ende der Vinylacetat- und der Emulgatordosierung wurde die "GMA-Dosierung", die ein weiteres Silan enthält, eingefahren. Zusammensetzung der "GMA-Dosierung": 4.82 kg Wasser, 71.04 g Genapol X 150, 1.93 kg Glycidylmethacrylat und 982.93 g 3-Methacryloxypropyltrimethoxysilan. Die Dosierzeit betrug 30 Minuten (Rate: 15.6 kg pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen:

Feststoffgehalt: 59.4 %, pH-Wert: 5.42; Brookfield-Viskosität 20 (Spindel 5): 4200 mPas; MFT: 1°C; Dichte: 1.059 g/ml

Beispiel 23:

Wie Beispiel 22 mit dem Unterschied, daß die Monomerdosierung neben 173.39 kg Vinylacetat und 43.35 kg VeoVa 10 noch 1.23 kg Vinyltrimethoxysilan enthielt. Die Dosierung wurde ebenfalls mit einer Rate von 33.54 kg pro Stunde zugegeben (Dauer: 6.5 Stunden).
Dispersionsanalysen:

Feststoffgehalt: 58.8 %, pH-Wert: 5.37; Brookfield-Viskosität 20 (Spindel 5): 3400 mPas; MFT: 1°C

Die Art, Menge und Zugabe des Silanmonomers b), des Epoxidmonomers c) und des 1,3-Dicarbonylmonomers d) sind in Tabelle 2 aufgeführt:

dos = dosiert,
ndos = nachdosiert mit Epoxidmonomer,
VTM = Vinyltrimethoxysilan,
VTE = Vinyltriethoxysilan,
VTME = Vinyltrimethoxyethoxysilan,
MPM = 3-Mercaptopropyltrimethoxysilan,
MTM = 3-Methacryloxypropyltrimethoxysilan,
GMA = Glycidylmethacrylat,
Acallyl = Allylacetoacetat.

Tabelle 2:

| Beispiel | Silan Gew.Teile | GMA Gew.Teile | Acallyl Gew.Teile |
|---|---|---|---|
| V 1 | 0.0 | 0.8 | 0.0 |
| V 2 | 0.5 VTM dos | 0.0 | 0.0 |
| 3a | 0.25 VTM dos | 0.8 | 0.0 |
| 3b | 0.1 VTM dos | 0.8 | 0.0 |
| 4 | 0.5 VTM dos | 0.8 | 0.0 |
| 5 | 0.75 VTM dos | 0.8 | 0.0 |
| 6 | 1.0 VTM dos | 0.8 | 0.0 |
| 7 | 0.5 VTM dos | 0.4 | 0.0 |
| 8 | 0.5 VTM dos | 0.8 | 0.0 |
| 9 | 0.5 VTM dos | 1.2 | 0.0 |
| 10 | 0.5 VTM dos | 1.5 | 0.0 |
| 11 | 0.5 VTM dos | 1.2 | 0.5 |
| 12 | 0.5 VTM dos | 1.2 | 0.0 |
| 13 | 0.5 VTM dos | 0.8 | 0.5 |
| 14 | 0.5 VTM dos | 0.8 | 0.0 |
| V 15 | 0.5 VTM dos | 0.0 | 0.5 |
| V 16 | 0.0 | 0.8 | 0.5 |
| 17 | 0.5 VTE | 0.8 | 0.0 |
| 18 | 0.5 VTME | 0.8 | 0.0 |
| 19 | 0.5 VTM + 0.4 MTM ndos | 0.8 | 0.0 |
| 20 | 0.25 VTM dos + 0.25 MPM dos | 1.2 | 0.0 |
| 21 | 0.5 VTM dos | 1.2 | 0.0 |

(fortgesetzt)

| Beispiel | Silan Gew.Teile | GMA Gew.Teile | Acallyl Gew.Teile |
|---|---|---|---|
| 22 | 0.5 VTE dos + 0.4 MTM ndos | 0.8 | 0.0 |
| 23 | 0.5 VTE dos + 0.4 MTM ndos | 0.8 | 0.0 |

Mit den Dispersionen wurden Farben in einer silikatreichen Rezeptur 1 ( Silikat/Carbonat = 180/43 Gew.-Teile) und einer carbonatreichen Rezeptur 2 (Carbonat/Silikat = 260/80 Gew.-Teile) gemäß der nachfolgend dargestellten Rezepturen hergestellt:

| Farbrezeptur 1 (silikatreich): | |
|---|---|
| Wasser | 300 |
| Celluloseether (Tylose H 6000 YP) | 6 |
| Dispergiermittel (Dispex N 40) | 5 |
| Dispergiermittel (Calgon N) | 5 |
| Natriumhydroxid (10 %-ig) | 1 |
| Konservierungsmittel (Hydorol W) | 1 |
| Entschäumer (Agitan 260) | 4 |
| Magnesiumsilikat (Talkum N) | 30 |
| Titandioxid-Pigment (Kronos 2300) | 250 |
| Aluminiumsilikat gefällt (P 820) | 50 |
| Aluminiumsilikat (China-Clay B) | 100 |
| Calciumcarbonat gefällt (Socal P2) | 13 |
| Dolomit (Microdol 1) | 30 |
| Polymerdispersion (55 %) | 200 |
| Entschäumer (Agitan 260) | 5 |
| Summe der Gewichtsteile | 1000 |

| Farbrezeptur 2 (carbonatreich): | |
|---|---|
| Wasser | 423 |
| Celluloseether (Tylose H6000YP) | 6 |
| Dispergiermittel (Dispex N 40) | 5 |
| Dispergiermittel (Calgon N) | 5 |
| Natriumhydroxid (10 %-ig) | 1 |
| Konservierungsmittel (Hydorol W) | 1 |
| Entschäumer (Agitan 260) | 4 |
| Magnesiumsilikat (Talkum N) | 80 |
| Titandioxid-Pigment (Kronos 2300) | 100 |
| Calciumcarbonat (Omyacarb 2 GU) | 70 |
| Calciumcarbonat (Omyacarb 5 GU) | 70 |
| Calciumcarbonat gefällt (Socal P2) | 70 |
| Dolomit (Microdol 1) | 50 |

(fortgesetzt)

| Farbrezeptur 2 (carbonatreich): | |
|---|---|
| Polymerdispersion (55 %) | 110 |
| Entschäumer (Agitan 260) | 5 |
| Summe der Gewichtsteile | 1000 |

Anwendungstechnische Prüfung:

Mit der silkatreichen Farbrezeptur 1 und der carbonatreichen Farbrezeptur 2 wurde die Nassabriebfestigkeit mittels der Vliesmethode (ISO 11998) getestet. Dazu wurde die Abtragung der Beschichtung nach 28 Tagen Lagerung (28d) über den Massenverlust der Farbfilms bestimmt. Aus der Farbdichte, der gescheuerten Flächen und dem Massenverlust der Farbfilms wurde dann der Farbabtrag in $\mu$m errechnet.

Die Synergiewirkung bei Copolymerisation mit der Silankomponente b) und der Epoxidkomponente c) zeigen die in Tabelle 3 zusammengefaßten Testergebnisse. Die Mengenangaben in Gew.-% beziehen sich dabei auf das Gesamtgewicht an Comonomer a) ohne Ethylenanteil.

Mit der Kombination der Comonomerkomponenten b) und c) wurden deutlich bessere Ergebnisse sowohl in silkatreichen als auch carbonatreichen Farbformulierungen erhalten.

In der silkatreichen Farbformulierung 1 wurden die Naßabriebsfestigkeiten mit steigender Silanmenge bei konstanter GMA-Menge immer besser, bis ein Optimum bei 0.5 Gew.-% erreicht wurde. Ein ausgeprägtes Optimum in bezug auf die Naßabriebsfestigkeit war bei der carbonatreichen Farbformulierung 2 zu erkennen, dieses lag im Bereich zwischen 0.1 bis 0.5 Teilen Silan.

Tabelle 3:

| Beispiel | GMA Gew.-% | VTM Gew.-% | Vliesmethode Naßabrieb 28d in $\mu$m Farbrezeptur 1 | Vliesmethode Naßabrieb 28d in $\mu$m Farbrezeptur 2 |
|---|---|---|---|---|
| V 1 | 0.8 | 0.0 | 31.0 | 68.0 |
| V 2 | 0.0 | 0.5 | 23.4 | 57.4 |
| 3a | 0.8 | 0.25 | 9.3 | 34.1 |
| 3b | 0.8 | 0.1 | 17.0 | 31.0 |
| 6 | 0.8 | 1.0 | 8.6 | 39.5 |
| 8 | 0.8 | 0.5 | 6.9 | 35.8 |

In Tabelle 4 sind die Ergebnisse der Bestimmung der Nassabriebsfestigkeit bei konstanter Vinyltrimethoxysilanmenge von 0.5 Gew.-% und variabler GMA-Menge dargestellt. Die Mengenangaben in Gew.-% beziehen sich dabei auf das Gesamtgewicht an Comonomer a) ohne Ethylenanteil.

Die optimale Menge an GMA bei konstanter Silanmenge von 0.5 Teilen liegt bei 0.4 bis 1.2 Teilen sowohl für die carbonatals auch die silkatreiche Farbformulierung.

Tabelle 4:

| Beispiel | GMA Gew.-% | VTM Gew.-% | Vliesmethode Nassabrieb 28d in $\mu$m Farbrezeptur 1 | Vliesmethode Nassabrieb 28d in $\mu$m Farbrezeptur 2 |
|---|---|---|---|---|
| V 1 | 0.8 | 0.0 | 31 | 68.0 |
| V 2 | 0.0 | 0.5 | 23 | 57.4 |
| 7 | 0.4 | 0.5 | 7.2 | 36.7 |
| 8 | 0.8 | 0.5 | 6.9 | 35.8 |
| 9 | 1.2 | 0.5 | 8.0 | 29.3 |
| 10 | 1.5 | 0.5 | 15.0 | 39.0 |

In Tabelle 5 sind die Meßergebnisse für die Abhängigkeit der Naßabriebfestigkeit von der Art des Silanes bei einer konstanter GMA-Menge von 0.8 Gew.-% dargestellt. Die Mengenangaben in Gew.-% beziehen sich dabei auf das Gesamtgewicht an Comonomer a) ohne Ethylenanteil.

Mit kurzkettigen Alkoxysilanen wurden bessere Ergebnisse erzielt, als mit schwerer hydrolisierbaren langkettigen Alkoxysilanen.

Tabelle 5:

| Beispiel | GMA Gew.-% | Silan | Gew.-% | Vliesmethode Naßabrieb 28d in $\mu$m Farbrezeptur 1 |
|---|---|---|---|---|
| V 1 | 0.8 | | | 31.0 |
| 8 | 0.8 | Vinyltrimethoxy | 0.5 | 6.9 |
| 17 | 0.8 | Vinyltriethoxy | 0.5 | 15.1 |
| 18 | 0.8 | Vinyltrimethoxyethoxy | 0.5 | 28.9 |

Der Synergieeffekt der Copolymerisation mit Silankomponente b) und Epoxidkomponente c) konnte mittels Kombination mit der 1,3-Dicarbonylkomponente d) noch weiter verstärkt werden. Die Meßergebnisse dazu sind in Tabelle 6 zusammengefaßt. Die Mengenangaben in Gew.-% beziehen sich dabei auf das Gesamtgewicht an Comonomer a) ohne Ethylenanteil.

In der carbonatreichen Farbformulierung 2 erhielt man mit Copolymerisation der 1,3-Dicarbonylkomponente d) nochmals eine bessere Naßabriebsfestigkeit. Bei der silikatreichen Formulierung 1 war der Effekt etwas geringer.

Der Vergleich von Vergleichsbeispiel 16 mit Beispiel 14 zeigt, daß ohne Silananteil b) die Naßhaftung deutlich abnimmt.

Der Vergleich von Vergleichsbeispiel 15 mit Beispiel 13 zeigt, daß die Verbesserung der Naßhaftung aufgrund der Epoxidkomponente c) vor allem bei carbonatreichen Formulierungen, weniger deutlich bei silikatreichen Formulierungen auftritt.

Der Vergleich von Beispiel 13 mit Beispiel 14, oder von Beispiel 11 mit Beispiel 12 zeigt, daß die Wirkung der 1,3-Dicarbonylkomponente d) besonders deutlich bei carbonatreichen Rezepturen auftritt.

Die Synergiewirkung der Kombination der Silankomponente b) mit der Epoxidkomponente c) nimmt mit steigender Epoxidmenge zu (Vergleich Beispiel 11 mit Beispiel 13).

Tabelle 6:

| Beispiel | GMA Gew.-% | VTM Gew.-% | Acallyl Gew.-% | Vliesmethode Naßabrieb 28d in $\mu$m Farbrezeptur 1 | Vliesmethode Naßabrieb 28d in $\mu$m Farbrezeptur 2 |
|---|---|---|---|---|---|
| 11 | 1.2 | 0.5 | 0.5 | 7.4 | 23.3 |
| 12 | 1.2 | 0.5 | 0.0 | 8.0 | 31.3 |
| 13 | 0.8 | 0.5 | 0.5 | 7.9 | 30.2 |
| 14 | 0.8 | 0.5 | 0.0 | 6.9 | 35.8 |
| V 15 | 0.0 | 0.5 | 0.5 | 8.7 | 36.4 |
| V 16 | 0.8 | 0.0 | 0.5 | 25.5 | 46.8 |

Aus Tabelle 7 geht die generelle Verbesserung der Naßabriebsfestigkeit durch den Einsatz von VeoVa 10 hervor. Die Mengenangaben in Gew.-% beziehen sich dabei auf das Gesamtgewicht an Comonomer a) ohne Ethylenanteil. Ein Vergleich von Vergleichsbeispiel 12 mit Beispiel 21, wo nur jeweils ein Silan b) verwendet wurde, oder ein Vergleich von Beispiel 19 mit Beispiel 21, wo mit Silankombinationen b) gearbeitet wurde, belegt dies. In beiden Farbrezepturen konnten Verbesserungen beobachtet werden.

Ferner zeigt sich aus dem Vergleich von Beispiel 12 mit Beispiel 19 oder aus dem Vergleich von Beispiel 21 mit Beispiel 23, daß eine Kombination von unterschiedlichen Silanen zu verbesserter Naßabriebsfestigkeit führt. Insbesondere wurden mit dem Einsatz von VeoVa 10 und einer Kombination zweier verschiedener Silane bei Anwesenheit der Epoxidkomponente c) sehr gute Werte erzielt. Ein Vergleich von Beispiel 22 mit Beispiel 23 belegt erneut, daß mit höhermolekularen Silanen schlechtere Naßabriebsfestigkeiten erhalten werden als mit niedermolekularen:

Tabelle 7

| Beispiel | Silan 1 Gew.-% | Silan 2 Gew.-% | GMA Gew.-% | VeoVa10 Gew.-% | Vliesmethode Naßabrieb 28d in μm Farbrezeptur1 | Vliesmethode Naßabrieb 28d in μm Farbrezeptur2 |
|---|---|---|---|---|---|---|
| 12 | 0.5 VTM | 0.0 | 1.2 | 0.0 | 8.0 | 31.3 |
| 19 | 0.5 VTM | 0.4 MTM | 0.8 | 0.0 | 5.3 | 25.9 |
| 21 | 0.5 VTM | 0.0 | 1.2 | 20.0 | 5.9 | 24.5 |
| 22 | 0.5 VTE | 0.4 MTM | 0.8 | 20.0 | 12.1 | 35.5 |
| 23 | 0.5 VTM | 0.4 MTM | 0.8 | 20.0 | 5.0 | 21.0 |

Die Einführung einer Kombination von verschiedenen Silanen b) führt offensichtlich zu einem verstärkten Synergismus mit der Epoxidkomponente c) und damit zu hohen Naßabriebsfestigkeiten. Dies ist Tabelle 8 zu entnehmen, wo bei dem Beispiel 20, bessere Resultate erzielt wurden als bei Beispiel 12, obwohl sich in allen Fällen der Gesamtgehalt der Silankomponente(n) b) jeweils auf 0,5 Gew.-% und der Epoxidanteil jeweils auf 1,2 Gew-% belief.

Tabelle 8:

| Beispiel | Silan 1 Gew.-% | Silan 2 Gew.-% | GMA Gew.-% | Vliesmethode Naßabrieb 28d in μm Farbrezeptur 1 | Vliesmethode Naßabrieb 28d in μm Farbrezeptur 2 |
|---|---|---|---|---|---|
| 12 | 0.5 VTM | 0.0 | 1.2 | 8.0 | 31.3 |
| 20 | 0.25 VTM | 0.25 MPM | 1.2 | 5.7 | 31.0 |

**Patentansprüche**

1.  Funktionalisierte Copolymerisate in Form deren wäßrigen Dispersionen oder in Wasser redispergierbaren Pulver, auf Basis von

     a) Vinylester-Copolymerisaten von Vinylacetat mit weiteren Vinylestern, oder Vinylester-Ethylen-Copolymerisaten, oder Vinylester-Ethylen-Vinylchlorid-Copolymerisaten, oder Vinylester-Acrylsäureester-Copolymerisaten, oder Methylmethacrylat-Copolymerisaten, oder Styrol-1,3-Butadien-Copolymerisaten, mit
     b) 0.05 bis 5.0 Gew.-% von einem oder mehreren hydrolysierbaren Silan-Monomeren aus der Gruppe umfassend ethylenisch ungesättigte, hydrolysierbare Siliciumverbindungen und hydrolysierbare Siliciumverbindungen aus der Gruppe umfassend Mercaptosilane,
     c) 0.05 bis 5.0 Gew.-% von einem oder mehreren Monomeren aus der Gruppe umfassend ethylenisch ungesättigte Epoxidverbindungen,
     d) 0 bis 2.0 Gew.-% von einem oder mehreren Monomeren aus der Gruppe umfassend ethylenisch ungesättigte 1,3-Dicarbonylverbindungen,

     sowie 99f. noch 0.05 bis 10 Gew.-% Hilfsmonomere aus der Gruppe umfassend ethylenisch ungesättigte Mono- und Dicarbonsäuren, ethylenisch ungesättigte Carbonsäureamide und -nitrile, Mono- und Diester der Fumarsäure und Maleinsäure, ethylenisch ungesättigte Sulfonsäuren bzw. deren Salze, vorvernetzende Comonomere aus der Gruppe der mehrfach ethylenisch ungesättigten Comonomere, und nachvernetzende Comonomere aus der Gruppe umfassend Acrylamidoglykolsäure (AGA), Methylacrylamidoglykolsäuremethylester (MAGNE), N-Methylolacrylamid (NMA), N-Methylolmethacrylamid, N-Methylolallylcarbamat, Alkylether oder Ester des N-Methylolacrylamids, des N-Methylolmethacrylamids und des N-Methylolallylcarbamats, wobei die Angaben in Gew.-% jeweils auf das Gesamtgewicht der eingesetzten Monomeren a) bezogen sind.

2.  Funktionalisierte Copolymerisate nach Anspruch 1, **dadurch gekennzeichnet, daß** die Comonomere a) so ausgewählt, daß wäßrige Copolymerdispersionen und wäßrige Redispersionen der Copolymerpulver resultieren, die ohne Zusatz von Filmbildehilfsmittel eine Mindestfilmbildetemperatur MFT von < 10°C aufweisen.

3. Funktionalisierte Copolymerisate nach Anspruch 1 oder 2, auf der Basis von Vinylacetat-Ethylen-Copolymerisaten und Copolymerisaten von Vinylacetat, Ethylen und Vinylester einer alpha-verzweigten Carbonsäure mit 9 oder 10 C-Atomen, welche jeweils noch die Comonomeranteile b), c), und gegebenenfalls d) sowie Hilfsmonomeranteile in den angegebenen Mengen enthalten können, und wobei die Copolymerzusammensetzung so gewählt wird, daß die damit erhältliche wäßrige Dispersion eine MFT von < 10°C aufweist.

4. Funktionalisierte Copolymerisate nach Anspruch 1 bis 3, **dadurch gekennzeichnet, daß** als hydrolysierbare Siliciumverbindungen b) ethylenisch ungesättigte Siliciumverbindungen enthalten sind, der allgemeinen Formel $R^1SiR_{0-2}(OR^2)_{1-3}$, wobei R die Bedeutung $C_1$- bis $C_3$-Alkylrest, $C_1$- bis $C_3$-Alkoxyrest oder Halogen (z.B. Cl oder Br) hat, $R^1$ die Bedeutung $CH_2=CR^3-(CH_2)_{0-1}$ oder $CH_2=CR^3CO_2(CH_2)_{1-3}$ hat, $R^2$ ein unverzweigter oder verzweigter, gegebenenfalls substituierter Alkylrest mit 1 bis 12 C-Atomen ist oder ein Acylrest mit 2 bis 12 C-Atomen ist, wobei $R^2$ gegebenenfalls durch eine Ethergruppe unterbrochen sein kann, und $R^3$ für H oder $CH_3$ steht.

5. Funktionalisierte Copolymerisate nach Anspruch 1 bis 3, **dadurch gekennzeichnet, daß** als hydrolysierbare Siliciumverbindungen b) solche enthalten sind, aus der Gruppe umfassend Mercaptosilane der allgemeinen Formel $HS-(CR^4_2)_{1-3}-SiR^5_3$, wobei $R^4$ gleich oder verschieden ist und die Bedeutung H und $C_1$- bis $C_6$-Alkylgruppe, $R^5$ gleich oder verschieden ist und die Bedeutung $C_1$- bis $C_6$-Alkylgruppe und $C_1$- bis $C_6$-Alkoxygruppe hat, wobei mindestens einer der Reste $R^5$ eine Alkoxygruppe ist.

6. Funktionalisierte Copolymerisate nach Anspruch 4 bis 5, **dadurch gekennzeichnet, daß** ein oder mehrere Silane aus der Gruppe umfassend Vinyltrimethoxysilan, Vinyltriethoxysilan, Vinyltris-(1-methoxy)-isopropoxysilan, Methacryloxypropyl-tris(2-methoxyethoxy)silan, 3-Mercaptopropyltrimethoxysilan, 3-Methacryloxypropyltrimethoxysilan, 3-Methacryloxypropylmethyldimethoxysilan und Methacryloxymethyltrimethoxysilan enthalten sind.

7. Funktionalisierte Copolymerisate nach Anspruch 6, **dadurch gekennzeichnet, daß** Gemische von 2 oder mehreren Silanen aus der Gruppe umfassend 3-Methacryloxypropyltrimethoxysilan oder Methacryloxymethyltrimethoxysilan mit Vinyltrimethoxysilan, Vinyltriethoxysilan, und/oder 3-Mercaptopropyltrimethoxysilan enthalten sind.

8. Funktionalisierte Copolymerisate nach Anspruch 1 bis 7, **dadurch gekennzeichnet, daß** als Epoxidgruppen enthaltende Comonomere c) ein oder mehrere aus der Gruppe umfassend Glycidylacrylat, Glycidylmethacrylat, Allylglycidether, Vinylglycidether, Vinylcyclohexenoxid, Limonenoxid, Myrcenoxid, Caryophyllenoxid, mit einem Glycidylrest im Aromaten substituierte Styrole und Vinyltoluole sowie mit einem Glycidresten im Aromaten substituierte Vinylbenzoate enthalten sind.

9. Funktionalisierte Copolymerisate nach Anspruch 8, **dadurch gekennzeichnet, daß** als Epoxidgruppen enthaltende Comonomere c) ein oder mehrere aus der Gruppe umfassend Glycidylacrylat, Glycidylmethacrylat, Allylglycidether, Vinylglycidether enthalten sind.

10. Funktionalisierte Copolymerisate nach Anspruch 1 bis 9, **dadurch gekennzeichnet, daß** als Monomereinheiten von ethylenisch ungesättigten 1,3-Dicarbonylverbindungen d) solche aus der Gruppe umfassend Acetacetoxyethylacrylat, Acetacetoxypropylmethacrylat, Acetacetoxyethylmethacrylat, Acetacetoxybutylmethacrylat, 2,3- Di(acetacetoxy)propylmethacrylat und Acetessigsäureallylester enthalten sind.

11. Funktionalisierte Copolymerisate nach Anspruch 1 bis 10, **dadurch gekennzeichnet, daß** 0.1 bis 1.0 Gew.-% Comonomer b) und 0.25 bis 1.5 Gew.-% Comonomer c) enthalten sind.

12. Verfahren zur Herstellung der funktionalisierten Copolymerisate aus Anspruch 1 bis 11, mittels radikalischer Polymerisation.

13. Verfahren gemäß Anspruch 12, **dadurch gekennzeichnet, daß** die Herstellung mittels Emulsionspolymerisation in Gegenwart von anionischen oder nichtionischen Emulgatoren oder deren Gemischen erfolgt.

14. Verfahren nach Anspruch 12 und 13, **dadurch gekennzeichnet, daß** der Silananteil b) insgesamt während der Polymerisation zudosiert und der Epoxidanteil c) ebenfalls insgesamt zudosiert wird.

15. Verfahren nach Anspruch 14, **dadurch gekennzeichnet, daß** der Epoxidanteil c) gegen Ende der Polymerisation, bei einem Umsatz von 80 bis 100 %, zudosiert wird

16. Verfahren nach Anspruch 14, **dadurch gekennzeichnet, daß** ein Gemisch von zwei oder mehreren verschiedenen Silanen b) zudosiert wird, wobei zunächst eines oder mehrere Silane kontinuierlich zudosiert werden und ein weiteres, anderes Silan zusammen mit dem Epoxidanteil c) nach Beendigung der Dosierung des ersten Silans zudosiert wird.

17. Verfahren nach Anspruch 12 bis 16, **dadurch gekennzeichnet, daß** nach Abschluß der Polymerisation zur Restmonomerentfernung nachpolymerisiert wird und gegebenenfalls flüchtige Restmonomere und weitere flüchtige, nicht wäßrige Bestandteile der Dispersion mittels Destillation entfernt werden.

18. Verfahren nach Anspruch 12 bis 17, **dadurch gekennzeichnet, daß** zur Herstellung von in Wasser redispergierbaren Polymerpulver die wäßrigen Dispersionen, gegebenenfalls nach Zusatz von Schutzkolloiden als Verdüsungshilfe, getrocknet werden.

19. Verwendung der funktionalisierten Copolymerisate nach Anspruch 1 bis 11 Beschichtungsmitteln.

20. Verwendung nach Anspruch 19, **dadurch gekennzeichnet, daß** die Beschichtungsmittel im Baubereich eingesetzt werden.

21. Verwendung nach Anspruch 19 und 20 in emissionsarmen Kunststoffdispersionsfarben und Kunststoffdispersionsputzen.

22. Verwendung nach Anspruch 19 bis 21, in carbonatreichen oder silikatreichen Rezepturen.

23. Verwendung nach Anspruch 19 bis 22 in hochgefüllten und überkritisch formulierten Rezepturen.


**Claims**

1. Functionalized copolymers in the form of their aqueous dispersions or water-redispersible powders, based on

    a) vinyl ester copolymers of vinyl acetate with further vinyl esters, or vinyl esterethylene copolymers, or vinyl ester-ethylenevinyl chloride copolymers, or vinyl esteracrylate copolymers, or methyl methacrylate copolymers, or styrene-1,3-butadiene copolymers, having
    b) from 0.05 to 5.0% by weight of one or more hydrolysable silane monomers from the group consisting of ethylenically unsaturated, hydrolysable silicon compounds and hydrolysable silicon compounds from the group consisting of mercaptosilanes,
    c) from 0.05 to 5.0% by weight of one or more monomers from the group consisting of ethylenically unsaturated epoxide compounds,
    d) from 0 to 2.0% by weight of one or more monomers from the group consisting of ethylenically unsaturated 1,3-dicarbonyl compounds,

    and, if appropriate, a further 0.05 to 10% by weight of auxiliary monomers from the group consisting of ethylenically unsaturated monocarboxylic and dicarboxylic acids, ethylenically unsaturated carboxamides and carbonitriles, monoesters and diesters of fumaric acid and maleic acid, ethylenically unsaturated sulphonic acids and their salts, precrosslinking comonomers from the group of polyethylenically unsaturated comonomers, and postcrosslinking comonomers from the group consisting of acrylamidoglycolic acid (AGA), methylacrylamidoglycolic acid methyl ester (MAGME), N-methylolacrylamide (NMA), N-methylolmethacrylamide, N-methylolallyl carbamate, alkyl ethers or esters of N-methylolacrylamide, of N-methylolmethacrylamide, and of N-methylolallyl carbamate, the figures in % by weight being based in each case on the overall weight of the monomers a) used.

2. Functionalized copolymers according to Claim 1, **characterized in that** the comonomers a) are selected so as to give aqueous copolymer dispersions and aqueous redispersions of the copolymer powders which without the addition of film forming auxiliaries have a minimum film formation temperature MFFT of < 10°C.

3. Functionalized copolymers according to Claim 1 or 2, based on vinyl acetate-ethylene copolymers and copolymers of vinyl acetate, ethylene and vinyl esters of an alpha-branched carboxylic acid having 9 or 10 carbon atoms, which may in each case further contain the comonomer fractions b), c), and, if desired, d), and also auxiliary monomer fractions in the stated amounts, and where the copolymer composition is chosen so that the aqueous dispersion obtainable therewith has an MFFT of < 10°C.

4. Functionalized copolymers according to any of Claims 1 to 3, **characterized in that** hydrolysable silicon compounds b) present comprise ethylenically unsaturated silicon compounds of the general formula $R^1SiR_{0-2}(OR^2)_{1-3}$, where R has the definition $C_1$ to $C_3$ alkyl radical, $C_1$ to $C_3$ alkoxy radical or halogen (e.g., Cl or Br), $R^1$ has the definition $CH_2=CR^3-(CH_2)_{0-1}$ or $CH_2=CR^3CO_2(CH_2)_{1-3}$, $R^2$ is an unbranched or branched, unsubstituted or substituted alkyl radical having 1 to 12 carbon atoms, or is an acyl radical having 2 to 12 carbon atoms, it being possible for $R^2$ to be interrupted, if desired, by an ether group, and $R^3$ is H or $CH_3$.

5. Functionalized copolymers according to any of Claims 1 to 3, **characterized in that** hydrolysable silicon compounds b) present comprise those from the group consisting of mercaptosilanes of the general formula $HS-(CR^4_2)_{1-3}-SiR^5_3$, where $R^4$ is identical or different and has the definition H and $C_1$ to $C_6$ alkyl group, $R^5$ is identical or different and has the definition $C_1$ to $C_6$ alkyl group and $C_1$ to $C_6$ alkoxy group, at least one of the radicals $R^5$ being an alkoxy group.

6. Functionalized copolymers according to Claim 4 or 5, **characterized in that** they comprise one or more silanes from the group consisting of vinyltrimethoxysilane, vinyltriethoxysilane, vinyltris-(1-methoxy)isopropoxysilane, methacryloxypropyl-tris(2-methoxyethoxy)silane, 3-mercaptopropyltrimethoxysilane, 3-methacryloxypropyltrimethoxysilane, 3-methacryloxypropylmethyldimethoxysilane, and methacryloxymethyltrimethoxysilane.

7. Functionalized copolymers according to Claim 6, **characterized in that** they comprise mixtures of 2 or more silanes from the group consisting of 3-methacryloxypropyltrimethoxysilane or methacryloxymethyltrimethoxysilane with vinyltrimethoxysilane, vinyltriethoxysilane and/or 3-mercaptopropyltrimethoxysilane.

8. Functionalized copolymers according to any of Claims 1 to 7, **characterized in that** they comprise as comonomer c) containing epoxide groups one or more from the group consisting of glycidyl acrylate, glycidyl methacrylate, allyl glycidyl ether, vinyl glycidyl ether, vinylcyclohexene oxide, limonene oxide, myrcene oxide, caryophyllene oxide, vinyltoluenes and styrenes substituted with a glycidyl radical in the aromatic moiety, and vinylbenzoates substituted with a glycidyl radical in the aromatic moiety.

9. Functionalized copolymers according to Claim 8, **characterized in that** they comprise as comonomers c) containing epoxide groups one or more from the group consisting of glycidyl acrylate, glycidyl methacrylate, allyl glycidyl ether, and vinyl glycidyl ether.

10. Functionalized copolymers according to any of Claims 1 to 9, **characterized in that** they comprise as monomer units of ethylenically unsaturated 1,3-dicarbonyl compounds d) those from the group consisting of acetoacetoxyethyl acrylate, acetoacetoxypropyl methacrylate, acetoacetoxyethyl methacrylate, acetoacetoxybutyl methacrylate, 2,3-di(acetoacetoxy)propyl methacrylate, and allyl acetoacetate.

11. Functionalized copolymer according to any of Claims 1 to 10, **characterized in that** they comprise from 0.1 to 1.0% by weight of comonomer b) and from 0.25 to 1.5% by weight of comonomer c).

12. Process for preparing the functionalized copolymers of any of Claims 1 to 11, by means of free-radical polymerization.

13. Process according to Claim 12, **characterized in that** the copolymer is prepared by means of emulsion polymerization in the presence of anionic or nonionic emulsifiers or mixtures thereof.

14. Process according to Claim 12 or 13, **characterized in that** the silane fraction b) is metered in in its entirety during the polymerization and the epoxide fraction c) is likewise metered in in its entirety.

15. Process according to Claim 14, **characterized in that** the epoxide fraction c) is metered in towards the end of the polymerization, at a conversion of from 80 to 100%.

16. Process according to Claim 14, **characterized in that** a mixture of two or more different silanes b) is metered in, first one or more silanes being metered in continuously and a further, different silane being metered in together with the epoxide fraction c) after the end of the metered addition of the first silane.

17. Process according to any of Claims 12 to 16, **characterized in that** after the end of the polymerization, postpolymerization is carried out for the purpose of removing residual monomer, and any volatile residual monomers and other volatile, nonaqueous constituents of the dispersion are removed by means of distillation.

18. Process according to any of Claims 12 to 17, **characterized in that** to prepare water-redispersible polymer powders the aqueous dispersions, following the addition of protective colloids as a spraying aid, if desired, are dried.

19. Use of the functionalized copolymers according to any of Claims 1 to 11 in coating compositions.

20. Use according to Claim 19, **characterized in that** the coating compositions are used in the building sector.

21. Use according to Claim 19 or 20 in low-emission polymer emulsion paints and polymer dispersion plasters.

22. Use according to any of Claims 19 to 21 in carbonate-rich or silicate-rich formulations.

23. Use according to any of Claims 19 to 22 in highly filled and supercritically formulated formulations.

## Revendications

1. Copolymères fonctionnalisés, sous forme de leurs dispersions aqueuses ou de poudres redispersables dans l'eau, à base de

   a) copolymères d'esters vinyliques d'acétate de vinyle avec d'autres esters vinyliques, ou copolymères ester vinylique/éthylène, ou copolymères ester vinylique/éthylène/chlorure de vinyle, ou copolymères ester vinylique/ ester d'acide acrylique, ou copolymères de méthacrylate de méthyle, ou copolymères styrène/1,3-butadiène, avec
   b) 0,05 à 5,0 % en poids d'un ou plusieurs monomères silane hydrolysables choisis dans le groupe comprenant des composés siliciés hydrolysables à insaturation éthylénique et des composés siliciés hydrolysables choisis dans le groupe comprenant des mercaptosilanes,
   c) 0,05 à 5,0 % en poids d'un ou plusieurs monomères choisis dans le groupe comprenant des composés époxy à insaturation éthylénique,
   d) 0 à 2,0 % en poids d'un ou plusieurs monomères choisis dans le groupe comprenant des composés 1,3-dicarbonyle à insaturation éthylénique,

   ainsi qu'éventuellement en outre 0,05 à 10 % en poids de monomères auxiliaires choisis dans le groupe comprenant des acides mono- et dicarboxyliques à insaturation éthylénique, des carboxamides et des carbonitriles à insaturation éthylénique, des mono- et diesters de l'acide fumarique et de l'acide maléique, des acides sulfoniques à insaturation éthylénique ou leurs sels, des comonomères à pré-réticulation choisis dans le groupe des comonomères à plusieurs insaturations éthyléniques, et des comonomères à post-réticulation choisis dans le groupe comprenant l'acide acrylamidoglycolique (AGA), le méthylacrylamidoglycolate de méthyle (MAGME), le N-méthylolacrylamide (NMA), le N-méthylolméthacrylamide, le carbamate de N-méthylolallyle, des éthers alkyliques ou des esters du N-méthylolacrylamide, du N-méthylolméthacrylamide et du carbamate de N-méthylolallyle, les données en % en poids étant chacune par rapport au poids total des monomères a) utilisés.

2. Copolymères fonctionnalisés selon la revendication 1, **caractérisés en ce que** les comonomères a) sont choisis de manière qu'il en résulte des dispersions aqueuses de copolymères et des redispersions aqueuses des poudres de copolymères qui, sans addition d'adjuvants filmogènes, présentent une température minimale de formation de film TMF de < 10°C.

3. Copolymères fonctionnalisés selon la revendication 1 ou 2, à base de copolymères acétate de vinyle/éthylène et de copolymères d'acétate de vinyle, éthylène et ester vinylique d'un acide carboxylique α-ramifié ayant 9 ou 10 atomes de carbone, qui peuvent chacun contenir en outre les fractions de comonomères b), c) et éventuellement d) ainsi que des fractions de monomères auxiliaires en les quantités indiquées, et la composition de copolymères étant choisie de telle sorte que la dispersion aqueuse pouvant être obtenue avec celle-ci présente une TMF de < 10°C.

4. Copolymères fonctionnalisés selon les revendications 1 à 3, **caractérisés en ce qu'**ils contiennent en tant que composés siliciés hydrolysables b) des composés siliciés à insaturation éthylénique de formule générale $R^1SiR_{0-2}(OR^2)_{1-3}$, R ayant la signification d'un radical alkyle en $C_1$-$C_3$, d'un radical alcoxy en $C_1$-$C_3$ ou d'un atome d'halogène (par exemple Cl ou Br), $R^1$ représentant $CH_2=CR^3-(CH_2)_{0-1}$ ou $CH_2=CR^3CO_2(CH_2)_{1-3}$, $R^2$ étant un radical alkyle ramifié ou non ramifié, éventuellement substitué, ayant de 1 à 12 atomes de carbone, ou un radical acyle ayant de 2 à 12 atomes de carbone, $R^2$ pouvant éventuellement être interrompu par un groupe éther, et $R^3$ représentant H ou $CH_3$.

**5.** Copolymères fonctionnalisés selon les revendications 1 à 3, **caractérisés en ce qu'**ils contiennent en tant que composés siliciés hydrolysables b) ceux choisis dans le groupe comprenant des mercaptosilanes de formule générale $HS-(CR^4_2)_{1-3}-SiR^5_3$, les radicaux $R^4$ étant identiques ou différents et ayant la signification de H et d'un groupe alkyle en $C_1$-$C_6$, les radicaux $R^5$ étant identiques ou différents et ayant la signification d'un groupe alkyle en $C_1$-$C_6$ et d'un groupe alcoxy en $C_1$-$C_6$, au moins l'un des radicaux $R^5$ étant un groupe alcoxy.

**6.** Copolymères fonctionnalisés selon les revendications 4 à 5, **caractérisés en ce qu'**ils contiennent un ou plusieurs silanes choisis dans le groupe comprenant le vinyltriméthoxysilane, le vinyltriéthoxysilane, le vinyl-tris-(1-méthoxy)-isopropoxysilane, le méthacryloxypropyl-tris(2-méthoxyéthoxy)silane, le 3-mercaptopropyltriméthoxysilane, le 3-méthacryloxypropyltriméthoxysilane, le 3-méthacryloxypropylméthyldiméthoxysilane et le méthacryloxyméthyltriméthoxysilane.

**7.** Copolymères fonctionnalisés selon la revendication 6, **caractérisés en ce qu'**ils contiennent des mélanges de deux ou plus de deux silanes choisis dans le groupe comprenant le 3-méthacryloxypropyltriméthoxysilane ou le méthacryloxyméthyltriméthoxysilane avec le vinyltriméthoxysilane, le vinyltriéthoxysilane et/ou le 3-mercaptopropyltriméthoxysilane.

**8.** Copolymères fonctionnalisés selon les revendications 1 à 7, **caractérisés en ce qu'**ils contiennent en tant que comonomère c) contenant des groupes époxy un ou plusieurs monomères choisis dans le groupe comprenant l'acrylate de glycidyle, le méthacrylate de glycidyle, l'allylglycidéther, le vinylglycidéther, l'oxyde de vinylcyclohexène, l'oxyde de limonène, l'oxyde de myrcène, l'oxyde de caryophyllène, des styrènes et vinyltoluènes substitués par un radical glycidyle sur le noyau aromatique ainsi que des benzoates de vinyle substitués par un radical glycide sur le noyau aromatique.

**9.** Copolymères fonctionnalisés selon la revendication 8, **caractérisés en ce qu'**ils contiennent en tant que comonomère c) contenant des groupes époxy un ou plusieurs monomères choisis dans le groupe comprenant l'acrylate de glycidyle, le méthacrylate de glycidyle, l'allylglycidéther, le vinylglycidéther.

**10.** Copolymères fonctionnalisés selon les revendications 1 à 9, **caractérisés en ce qu'**ils contiennent en tant que motifs monomères de composés 1,3-dicarbonyle à insaturation éthylénique d) ceux choisis dans le groupe comprenant l'acrylate d'acétoacétoxyéthyle, le méthacrylate d'acétoacétoxypropyle, le méthacrylate d'acétoacétoxyéthyle, le méthacrylate d'acétoacétoxybutyle, le méthacrylate de 2,3-di(acétoacétoxy)propyle et l'acétoacétate d'allyle.

**11.** Copolymères fonctionnalisés selon les revendications 1 à 10, **caractérisés en ce qu'**ils contiennent de 0,1 à 1,0 % en poids de comonomère b) et de 0,25 à 1,5 % en poids de comonomère c).

**12.** Procédé pour la préparation des copolymères fonctionnalisés des revendications 1 à 11, par polymérisation radicalaire.

**13.** Procédé selon la revendication 12, **caractérisé en ce que** la préparation s'effectue par polymérisation en émulsion, en présence d'émulsifiants anioniques ou non ioniques ou de mélanges de ceux-ci.

**14.** Procédé selon les revendications 12 et 13, **caractérisé en ce que** la fraction silane b) est ajoutée de façon réglée en totalité pendant la polymérisation et la fraction époxyde c) est également ajoutée de façon réglée en totalité.

**15.** Procédé selon la revendication 14, **caractérisé en ce que** la fraction époxyde c) est ajoutée de façon réglée vers la fin de la polymérisation, à un degré de conversion de 80 à 100 %.

**16.** Procédé selon la revendication 14, **caractérisé en ce qu'**on ajoute de façon réglée un mélange de deux ou plus de deux silanes b) différents, en ajoutant de façon réglée, en continu, d'abord un ou plusieurs silanes et en ajoutant un autre silane différent conjointement avec la fraction époxyde c), une fois terminée l'addition réglée du premier silane.

**17.** Procédé selon les revendications 12 à 16, **caractérisé en ce qu'**une fois terminée la polymérisation, on effectue une post-polymérisation pour l'élimination des monomères résiduels, et éventuellement des monomères résiduels volatils et d'autres composants volatils non aqueux de la dispersion sont éliminés par distillation.

**18.** Procédé selon les revendications 12 à 17, **caractérisé en ce que**, pour la préparation de poudres de polymères redispersables dans l'eau, les dispersions aqueuses sont séchées, éventuellement après addition de colloïdes protecteurs en tant qu'adjuvant de pulvérisation.

**19.** Utilisation des copolymères fonctionnalisés selon les revendications 1 à 11, dans des agents de revêtement.

**20.** Utilisation selon la revendication 19, **caractérisée en ce que** les agents de revêtement sont utilisés dans le domaine du bâtiment.

**21.** Utilisation selon les revendications 19 et 20, dans des enduits en dispersion à base de matières plastiques et des peintures en dispersion à base de matières plastiques pauvres en émissions.

**22.** Utilisation selon les revendications 19 à 21, dans des formulations riches en silicates ou riches en carbonates.

**23.** Utilisation selon les revendications 19 à 22, dans des formulations à haute teneur en charges et à formulation supercritique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2148457 C
- GB 1407827 A
- EP 327376 A
- EP 327006 A
- US 5576384 A